Europäisches Patentamt

**European Patent Office**

**Office européen des brevets**

(11) Numéro de publication: **0 150 153**
**A2**

## (12) DEMANDE DE BREVET EUROPEEN

(21) Numéro de dépôt: **85400102.1**

(22) Date de dépôt: **23.01.85**

(51) Int. Cl.⁴: **E 06 B 3/50**
**E 05 B 65/08, B 60 J 1/16**

(30) Priorité: **24.01.84 FR 8401047**

(43) Date de publication de la demande:
**31.07.85 Bulletin 85/31**

(84) Etats contractants désignés:
**BE CH DE GB LI LU**

(71) Demandeur: **Etablissements FARNIER ET PENIN**
**11-13, rue J.B. Charcot**
**F-92400 Courbevoie (Hauts-de-Seine)(FR)**

(72) Inventeur: **Ouvrard, Gaston**
**18, rue de Bellefeuille**
**F-79300 Bressuire(FR)**

(72) Inventeur: **Neaux, Jean-Claude**
**8 Chemin du pas Bodin Terves**
**F-79300 Bressuire(FR)**

(74) Mandataire: **Chevallier, Robert Marie Georges**
**Cabinet BOETTCHER 23, rue La Boétie**
**F-75008 Paris(FR)**

(54) **Baie à vitres coulissantes parallèlement ayant une surface commune de fermeture.**

(57) Baie à vitres coulissantes parallèlement ayant un plan commun de fermeture.

Les vitres coulissantes (11, 12) sont munies d'ergots qui sont engagés dans des rainures (9, 10) parallèles réunies par des guides de déviation (17) ayant une rainure (18) en oblique faisant communiquer ces rainures (9, 10) de sorte que les deux vitres (11, 12) sont situées dans un même plan en position de fermeture et dans deux plans parallèles en position d'ouverture.

*Fig. 1*

EP 0 150 153 A2

Baie à vitres coulissantes parallèlement ayant une surface commune de fermeture.

L'invention a pour objet une baie à vitres coulissantes dans des positions parallèles du type des baies que l'on monte couramment sur les véhicules. Toutefois, il est entendu que l'invention n'est pas limitée à cette utilisation et qu'elle peut servir aussi, par exemple, dans toutes habitations mobiles ou immobiles, avec des vitres planes ou galbées.

Les baies classiques largement répandues comprennent un cadre qui présente des rainures ouvertes vers l'intérieur de ce cadre et dans lesquelles sont montées, généralement, deux vitres disposées respectivement dans deux plans parallèles. Chaque vitre occupe une moitié de la surface limitée par le cadre et il existe fréquemment un moyen de fermeture qui comble l'intervalle existant entre les deux bords libres des vitres quand elles occupent l'une et l'autre leur position de fermeture dans des plans différents. Ce moyen de fermeture est fréquemment une traverse qui s'étend entre deux côtés opposés du cadre. L'une des vitres peut être fixe et l'autre vitre coulissante dans ses rainures ou bien les deux vitres peuvent être coulissantes dans leurs rainures respectives. Dans tous les cas, les deux vitres sont toujours situées dans des plans parallèles, qu'elles soient en position de fermeture ou en position d'ouverture.

L'invention a pour but principal de parvenir à une baie à vitres coulissantes dans laquelle les deux vitres sont situées dans une même surface en position de fermeture et l'une au moins de ces deux vitres est coulissante jusqu'à une position d'ouverture dans une surface parallèle à l'autre vitre.

A partir d'un cadre de baie ayant dans au moins chacun de deux côtés opposés deux rainures parallèles ouvertes vers l'intérieur, au moins deux vitres occupant chacune, en position de fermeture, une fraction de la surface du cadre dont une au moins de ces vitres est déplaçable par coulissement, selon l'invention, en position de fermeture les deux vitres sont disposées dans un même plan qui correspond à une première rainure et il existe des moyens de déplacement en sens transversal de l'une au moins des deux vitres la guidant de cette première rainure à la seconde rainure pour le coulissement de cette vitre à sa position d'ouverture dans un plan parallèle à l'autre vitre.

Dans un mode de réalisation, selon l'invention, il existe entre les deux rainures, à l'emplacement des deux extrémités opposées de la vitre coulissante, mise en position de fermeture, des guides de déviation ayant une rainure en oblique faisant communiquer ces deux rainures; en outre ladite vitre est munie en correspondance d'ergots qui sont engagés dans les rainures.

De cette façon, quand le cadre ne contient que deux vitres, une première vitre est engagée dans une première rainure, et une seconde vitre munie des ergots est susceptible d'occuper une première position dite de fermeture dans la première rainure et dans le même plan que la première vitre, et une seconde position dite d'ouverture dans la seconde rainure, le passage de la première rainure à la seconde rainure se faisant par coulissement des ergots dans les guides de déviation.

La première vitre montée dans la première rainure peut être fixe ; elle peut aussi selon l'invention être munie d'ergots engagés dans la première rainure pour pouvoir coulisser sur toute la longueur de celle-ci quand la seconde vitre a été déplacée et mise dans la seconde rainure.

Le long de son bord libre proche de la seconde vitre en position de fermeture, la première vitre est munie d'une barre de fermeture qui obture l'intervalle existant par rapport au bord libre de la seconde vitre. Cette barre est fixe et peut être réunie au cadre quand la première vitre est fixe elle-même. Cette barre est fixée à la première vitre quand celle-ci est mobile par coulissement dans sa rainure.

La seconde vitre qui est coulissante dans tous les cas est pourvue de moyens de verrouillage permettant de l'immobiliser en position de fermeture quand elle est dans le même plan que la première vitre.

Dans un mode de réalisation de l'invention, les moyens de verrouillage de la seconde vitre sont fixés à son bord libre proche de la première vitre, en position de fermeture ; ces moyens de verrouillage comprennent un élément d'accrochage destiné à coopérer avec un élément d'accrochage complémentaire fixé soit au bord libre de la première vitre, soit à la barre de fermeture.

De préférence, l'élément d'accrochage comprend d'une part une base qui est fixée à la seconde vitre et qui présente une partie d'une articulation, d'autre part un crochet qui est pourvu d'un moyen de manoeuvre et d'une partie complémentaire de l'articulation. L'élément d'accrochage complémentaire est constitué par un profilé à section droite en L qui se fixe à la fois à la première vitre et qui présente une lèvre destinée à coopérer avec le crochet.

On donnera maintenant, sans intention limitative et sans exclure aucune variante, une description d'un mode préféré de réalisation. On se reportera au dessin annexé dans lequel,

- la figure 1 est une vue de dessus en coupe par un plan horizontal d'une baie à deux vitres conforme à l'invention, ces vitres étant en position de fermeture dans un même plan,
- la figure 2 est vue d'extrémité en coupe par un plan vertical de la même baie, mais l'une des vitres est en position d'ouverture.

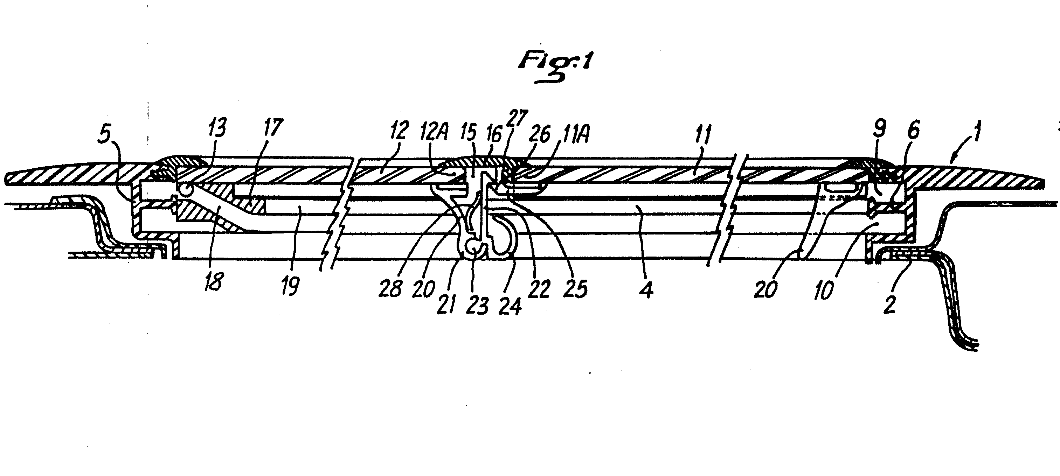

La figure 1 montre un cadre 1 qui est fixé à l'intérieur d'une ouverture ménagée à cette fin dans une carrosserie 2 d'un véhicule automobile. Ce cadre 1 a un côté supérieur 3 et un côté inférieur 4 réunis par deux montants 5, 6. Dans chacun des côtés supérieur 3 et inférieur 4 sont prévus deux rainures parallèles 7, 8 et

0150153

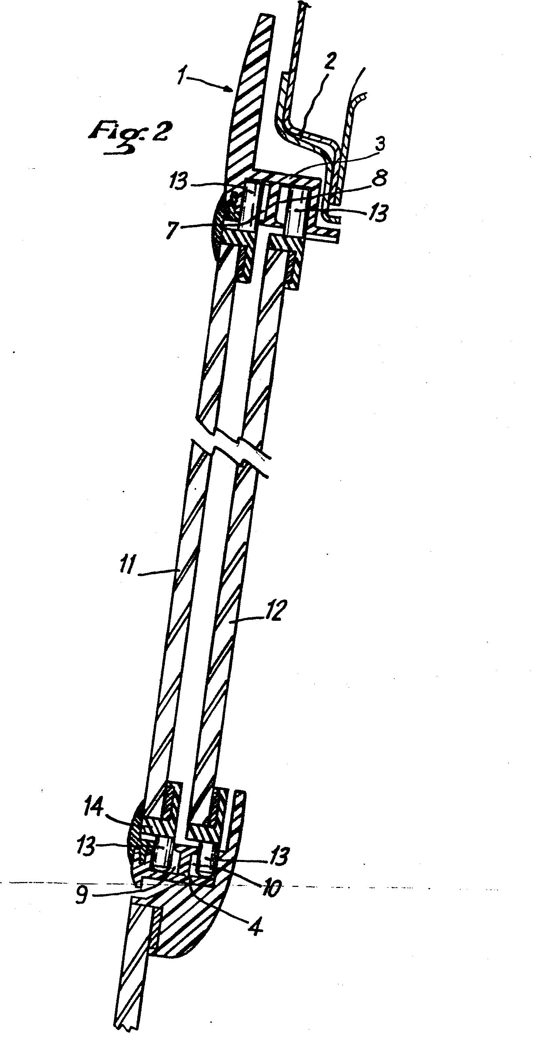

9, 10 qui sont mieux visibles sur la figure 2. Ces rainures existent aussi dans les montants 5, 6 parce que le même profilé sert à réaliser les quatre côtés du cadre 1.

Deux vitres 11 et 12 sont montées à l'intérieur du cadre 1 pour en occuper chacune la moitié de la surface. Chacune de ces deux vitres 11, 12 est munie sur ses bords inférieur et supérieur, à chacune de ses extrémités, d'un ergot cylindrique 13. Il existe donc quatre ergots 13 sur chaque vitre ; ces ergots sont destinés à être engagés dans les rainures 7, 8 et 9, 10, de façon à pouvoir y coulisser. Deux ergots 13 de chaque vitre 11, 12 sont visibles sur la figure 2, engagés dans les rainures correspondantes. Seul un ergot 13, situé à l'extrémité avant du bord inférieur de la première vitre 12 est visible sur la figure 1, pour la clarté du dessin.

Les ergots 13 sont fixés à chaque vitre 11, 12 au moyen d'un profilé 14 à profil en L qui recouvre une bande longitudinale d'une face principale de la vitre et la face adjacente. Chaque profilé 14 est fixé à la vitre, par exemple à l'aide d'un adhésif, et les ergots 13 sont eux-mêmes fixés, par paire, aux extrémités de ce profilé.

En position de fermeture des vitres, tous les pions 13 des deux vitres 11, 12 sont engagés dans la même rainure inférieure 9 et dans la même rainure supérieure 7, de sorte que ces deux vitres sont dans un même plan vertical (figure 1). Dans cette position, il existe entre le bord extrême libre 11A de la première vitre 11 et le bord extrême libre 12A de la seconde vitre 12 un intervalle 15. Ce dernier est obturé par une barre de fermeture 16 qui est fixée au bord extrême 11A de la première vitre 11 et qui s'étend jusqu'au-delà de l'intervalle 15 pour s'appliquer contre la face principale de la seconde vitre 12 quand celle-ci est en position de fermeture.

Il existe entre les rainures 7, 8 et 9, 10 des côtés supérieur 3 et inférieur 4 des guides de déviation 17 qui établissent une communication entre les rainures voisines parallèles, 7 et 8 dans le côté supérieur 3 et 9, 10 dans le côté inférieur 4. Chaque guide 17 est une pièce rapportée qui possède une rainure 18 en oblique raccordant les deux rainures voisines parallèles 7, 8 et 9, 10. A cette fin, la paroi centrale 19 commune à ces rainures a été supprimée pour permettre la mise en place du guide de déviation 17. Un seul guide 17 a été représenté sur la figure 1, pour la clarté du dessin. Il existe pour la seconde vitre 12 quatre guides de déviation 17 disposés chacun à l'emplacement des ergots 13 de cette vitre mise en position de fermeture.

Quand on tire cette seconde vitre 12 vers les rainures 8, 10 et vers sa position d'ouverture, chacun de ses ergots 13 emprunte la rainure de déviation 18 correspondante et parvient dans les rainures voisines 8, 10. On peut alors déplacer cette vitre dans ces rainures jusqu'à sa position d'ouverture totale où elle est parallèle à la première vitre 11, comme le montre la figure 2, chacune occupant ses rainures respectives 8, 10 et 7, 9.

La première vitre 11 pourrait être fixe dans ses rainures 7, 9. Dans le présent exemple, elle est coulissante aussi. En effet, quand la seconde vitre 12 a été déplacée des rainures 7, 9 aux rainures 8, 10, sans être mise à sa position d'ouverture totale, on peut faire coulisser la première vitre 11 dans ses rainures 7, 9 jusqu'à sa position d'ouverture totale à la place occupée précédemment par la seconde vitre 12. Pour faciliter cette manoeuvre, la première vitre 11 est pourvue à son extrémité éloignée de la seconde vitre 12 d'une patte de manoeuvre 20.

Grâce à l'invention, on peut ouvrir à volonté soit la moitié avant soit la moitié arrière de la baie.

Chaque vitre 11, 12 est munie d'un moyen de verrouillage en position de fermeture. Il est avantageux, selon l'invention, de combiner les moyens de verrouillage en utilisant l'intervalle 15 qui existe entre les deux vitres mises en position de fermeture dans les mêmes rainures 7, 9. Sur son bord libre 12A, proche de la vitre 11, la seconde vitre 12 est pourvue d'une base 20 fixée par une extrémité à cette vitre 12 et présentant une partie 21 d'une articulation éloignée de la vitre. Un crochet 22 a une partie complémentaire 23 d'articulation engagée dans la partie d'articulation 21. Ce crochet est pourvu aussi d'un moyen de manoeuvre 24 qui permet de le faire pivoter et de tirer commodément sur la première vitre 11 pour la manoeuvrer. Le crochet 22 s'étend jusque dans l'intervalle 15 où il coopère, en position de fermeture, avec un élément d'accrochage complémentaire 25. Ce dernier est constitué par un profilé à section droite en L qui est fixé au bord libre 11A de la première vitre 11 et qui présente une lèvre 26 pour l'accrochage du crochet 22. Avantageusement, ce profilé 26 a encore un talon 27 qui pénètre dans une gorge correspondante prévue dans la barre de fermeture 16. Un ressort 28 disposé entre la base 20 et le crochet 22 repousse ce dernier en position d'engagement avec l'élément d'accrochage 25. Dans cette position, les deux vitres 11, 12 situées dans un même plan sont verrouillées mutuellement.

On remarquera que l'invention n'impose pas une position ni une orientation particulière du cadre 1 ; elle peut donc être utilisée sur une baie située à droite ou située à gauche sur un véhicule. Cette souplesse d'emploi est accrue par le fait que les moyens de verrouillage sont montés de préférence dans la zone médiane des vitres 11, 12, de préférence sur l'axe général longitudinal de symétrie du cadre 1 c'est-à-dire au milieu de la dimension séparant les rainures opposées qui servent au guidage.

Il est entendu aussi que l'usage des mots supérieur et inférieur pour la facilité de la description ne limite pas la position que l'on peut donner au cadre 1.

De même, bien que l'on se soit référé par commodité à des vitres planes, il est clair que l'invention n'impose pas la planéité des vitres ; ces dernières peuvent être incurvées ou galbées et avoir une configuration quelconque autre que rectangulaire. L'invention est donc utilisable sur les véhicules en tous genres, y compris sur les voitures ferroviaires, les navires, de même que dans les constructions fixes.

REVENDICATIONS

1. Baie comprenant un cadre (1) contenant deux vitres (11, 12) dont l'une au moins est coulissante, ces vitres étant guidées par des ergots (13) dans une première paire de deux rainures (7, 9) et une seconde paire de deux autres rainures (8, 10) déportées transversalement aux vitres avec des guides de déviation (17) de raccordement desdites rainures de sorte qu'en position d'ouverture les deux vitres (11, 12) sont contenues dans deux surfaces parallèles et en position de fermeture ces mêmes vitres (11, 12) sont contenues dans une même surface avec un bord extrême (11A) d'une vitre (11) séparé par un intervalle (15) d'un bord extrême (12A) de l'autre vitre (12), des moyens de verrouillage et de manoeuvre étant prévus pour immobiliser et manoeuvrer l'une au moins de ces vitres, caractérisée en ce que les moyens de verrouillage sont disposés en partie dans ledit intervalle (15) et comprennent des éléments complémentaires qui sont fixés respectivement aux bords extrêmes (11A, 12A) en regard l'un de l'autre de l'une et de l'autre vitre (11, 12).

2. Baie selon la revendication 1 caractérisée en ce que les moyens de verrouillage comprennent une base (20) fixée au bord extrême libre (12A) d'une vitre (12) coulissante et portant un crochet articulé (22) tandis qu'un profilé (25) ayant une lèvre (26) d'accrochage du crochet (22) est fixé au bord extrême libre (11A) de l'autre vitre (11).

3. Baie selon la revendication 2 caractérisée en ce que la base (20) comprend en dehors de l'intervalle (15) des deux vitres (11, 12) une partie (21) d'une articulation cependant que le crochet (22) est pourvu d'une partie complémentaire (23) d'articulation engagée dans la partie (21) portée par la base (20).

Fig.1

Fig. 2